# EUROPEAN PATENT APPLICATION

(11) **EP 0 747 286 A2**
(43) Date of publication of application: **11.12.1996**
(21) Application number: 96830334.7
(22) Date of filing: 07.06.1996
(51) Int. Cl.: B64D 11/06

(54) **Improved mechanism for the conversion of passenger seats, particularly for aircraft**

(30) Priority: 09.06.1995 IT RM950389; 11.09.1995 IT RM950605
(71) Applicant: AVIOINTERIORS S.P.A., I-04013 Tor Tre Ponti Latina (IT)
(72) Inventor: Veneruso, Raffaele, Aviointeriors S.p.A., 04103 Latina (IT)
(74) Representative: Iannone, Carlo Luigi

(57) **Abstract**

The present invention relates to a mechanism for the transformation of passenger seats, particularly for aircraft, wherein three seat frames are provided, respectively a wall (8), a central and a lateral (10) seat, each one of said frames comprising two substantially parallel lateral transverse elements (11, 12, 13, 14, 15 ,16), the outermost (11) of which of the wall seat (8) is fixed, said mechanism comprising at least two longitudinal fixed frame elements (2), coupled to the seat feet (1), at least two telescopic elements (3; 3'; 3"), parallel with respect to said longitudinal fixed frame elements (2), comprising an inner tube (3') and an outer tube (3"), and coupled to said transverse elements (12, 13, 14, 15, 16) of the frame of said seats, means operable by actuating outer means, determining the displacement of said transverse frame elements, means (19, 20; 19, 20, 29, 30, 31, 32) transmitting the motion of at least one of said transverse elements (12, 13, 14, 15) to the sides (17, 18; 27, 28) of at least one of said seats (8, 9,10) and means (23, 24 25, 26; 33, 26) transmitting the motion of one of said transverse frame elements (13, 14) to a corresponding armrest (21, 22) between the central seat (9), and, respectively, the wall seat (8) and the lateral seat (10).

## Description

The present invention relates to a mechanism for the conversion of passenger seats, particularly for aircraft.

More particularly, the invention relates to a mechanism of the above kind allowing the transformation of a group of three "economic" seats into three "business" seats or eventually into two "business" seats.

As it is well known, in the aircraft for short and medium distances journeys, a clear separation between the "economic" and "business" zone does not exist.

Prevailingly, they are aircraft having a only one passage between two seat rows, each row comprising usually three or two flanked seats.

On the other side, also for shorter journeys, the air companies have the needing of providing to the clients the "business" service, service involving further the employment of larger seats.

Further, according to the requests the kind of journey, the needing of providing a greater number of "business" seats could exist.

This needing is in contrast to the existence of a fixed structure, that would require the replacement of the seats each time, with all the implicit complications that would make the operation impossible.

To this aim, some solutions have been already proposed, particularly by "The Boeing Company", said solutions allowing to rapidly convert "economic" seats into "business" seats in a fast way and without the need of complex operations.

A solution of this kind is described in the U.S. patent N° 4,881,702, assigned to "The Boeing Company", wherein it is described a solution providing that, in a three seat group, the central one remains fixed and the two lateral ones enlarge, in case of transformation from three "economic" seats into two "business" seats.

In this case, the mechanism allowing the motion provides a frame structure with telescopic tubes controlled by a leverage system by a handle.

This system, although allows the obtainment of the desired results, has some drawbacks.

First, it is rather complex under a mechanical point of view.

Further, since the enlargement of the two lateral seats occurs by the co-action of the lateral sides of the central seat, the final solution is not symmetrical, with the certain practical and aesthetical disadvantages.

Other solutions are those proposed in the U.S. patents N° 5,104,065, 5,178,345, 5,131,601 and 5,284,379, of the same Company.

The Applicant now suggests according to the present invention a new solution allowing to overcome the above mentioned drawbacks.

The solution proposed according to the present invention allows to make both a transformation from three "economic" seats into two "business" seats, in the following indicated as 3x2 transformation, and a transformation from three "economic" seats into three "business" seats, in the following indicated as 3x3 transformation, with proportional displacements between the involved parts, so as to maintain a symmetricity of the final structure and a pleasant aesthetical aspect.

Further, it is the object of the present invention that of providing a mechanism simple and easily operable.

A further object of the present invention is that of providing a solution that can be easily motorised.

These and other results are obtained according to the present invention suggesting a mechanism for the transformation of passenger seats, particularly for aircraft, wherein the wall seat is maintained fixed and the moving mechanism among the various seats is transmitted by a worm screw having different threads so as to obtain a proportional motion.

It is therefore specific object of the present invention a mechanism for the transformation of passenger seats, particularly for aircraft, wherein three seat frames are provided, respectively a wall, a central and a lateral seat, each one of said frames comprising two substantially parallel lateral transverse elements, the outermost of which of the wall seat is fixed, said mechanism comprising at least two longitudinal fixed frame elements, coupled to the seat feet, at least two telescopic elements, parallel with respect to said longitudinal fixed frame elements, comprising an inner tube and an outer tube, and coupled to said transverse elements of the frame of said seats, means operable by actuating outer means, determining the displacement of said transverse frame elements, means transmitting the motion of at least one of said transverse elements to the sides of at least one of said seats and means transmitting the motion of one of said transverse frame elements to a corresponding armrest between the central seat and, respectively, the wall seat and the lateral seat.

Further, according to the invention, the inner transverse element of the wall seat, both the transverse elements of the central seat and the inner one of the lateral seat are slidably provided on said telescopic tubes, while the outer one of the lateral seat is coupled to the inner tubes of the telescopic tubes.

According to a first embodiment of the mechanism according to the invention, said means operable by outer means can be comprised of a worm screw provided between the inner transverse element of the wall seat and the outer transverse element of the lateral seat, operable by external means, determining the motion of said transverse elements of the frames.

According to a second embodiment of the mechanism according to the invention, said means operable by outer means can be comprised of a reduction unit connected on one side to a drive shaft and on the other side to a first and second rack element, said rack elements being parallel with respect to the frame, and coupled to the inner transverse element of the wall seat and to the outer transverse element of the central seat, respectively, operable by outer means, determining the motion of said frame transverse elements, said reduction unit determining a different motion of said first and second rack element.

Preferably, according to the invention, said worm screw provides two portions having a different thread, particularly, the portion corresponding to the frame of the lateral seat has a thread about double with respect to the one of the central seat.

Always according to the invention, said worm screw can be operated by an electric screwdriver, a crank and like.

Preferably, according to the invention, said reduction unit provides an epicycloid gear driven by said drive shaft and two pinions, said pinions being driven by said epicycloid gear and transmitting the motion to said first and second rack elements, said pinions having different size and number of teeth in order to obtain said different motion of said rack elements.

Further, according to the invention, the motion of said first rack element is about the double with respect to the motion of said second rack element.

Always according to the invention, said reduction unit is driven by an electric screwdriver, a crank or like, or by a motor.

According to a first embodiment of the mechanism according to the invention, said means for transmitting the motion of at least one transverse frame element to the sides of at least one of said seats are provided between a frame element and the sides of the central seat and determine an approaching of the above sides during the transformation from "economic" into "business", the means for transmitting the motion of one of the transverse frame elements to a corresponding armrest determining the motion of the armrest in a direction opposite to the motion direction of the transverse frame element.

In this case, said means for the transmission of the motion of one of the frame elements to a corresponding armrest comprises a first lever, fixed to the frame element in a position substantially perpendicular to the same, a second diagonal lever, coupled to the end of said first lever, a third lever, coupled to the end of said second diagonal lever and to said armrest and sliding along the outer tube of a telescopic tube and along an arm parallel with respect to said telescopic tube.

According to a second embodiment of the mechanism according to the invention, said means for transmitting the motion of at least one transverse frame element to the sides of a least one of said seats are provided between a frame element and the sides of the central seat and between two further frame elements and the inner sides of the wall seat and lateral seat, respectively, and determine an motion away of the above sides during the transformation from "economic" into "business", the means for transmitting the motion of one of the transverse frame elements to a corresponding armrest determining the motion of the armrest in the same direction of the motion of the transverse frame element.

In this case, said means for the transmission of the motion of one of the frame elements to a corresponding armrest comprises a bracket, provided between the outer tube of one of the telescopic tubes and the armrest so as to drag it during its motion, with a first idle step of the motion, said armrest sliding along an arm parallel with respect to said telescopic tube.

Preferably, according to the invention, said means transmitting the motion of at least one of said transverse elements to the sides of at least one seat comprise a wire, connected on one side to one of said transverse elements and on the other side to a lever system, provided within the seat back, acting on the same sides.

Particularly, said lever system provides a first vertical lever, connected at its ends to two shaped levers upon which one or two further lever, depending on the fact whether it is acting an one or both the sides of the seat, are pivoted.

The present invention will be now described, for illustrative, but not limitative purposes, according to its preferred embodiments, with particular reference to the figures of the enclosed drawings, wherein:
figure 1 is a perspective view from the bottom of a mechanism according to the invention;
figure 2 is a perspective view, partially cut-away, of a first group of three seats provided with a mechanism according to the invention;
figure 3 shows a particular of figure 2;
figure 4 shows the particular of figure 3 in a different position;
figure 5 is a perspective view, partially cut-away, of a second group of three seats provided with a mechanism according to the invention;
figure 6 shows a particular of figure 5;
figure 7 shows the particular of figure 6 in a different position;
figure 8 is a perspective view from the bottom of a second embodiment of the mechanism according to the invention;
figure 9 is a perspective view, partially cut-away, of a first group of three seats provided with a mechanism according to figure 8;
figure 10 is a perspective view, partially cut-away, of a second group of three seats provided with a mechanism according to figure 8;
figure 11 shows a particular of figure 10;
figure 12 shows the particular of figure 11 in a different position;
figure 13 is a perspective view of the mechanism according to figure 8; and
figure 14 is a lateral view of the mechanism of figure 13.

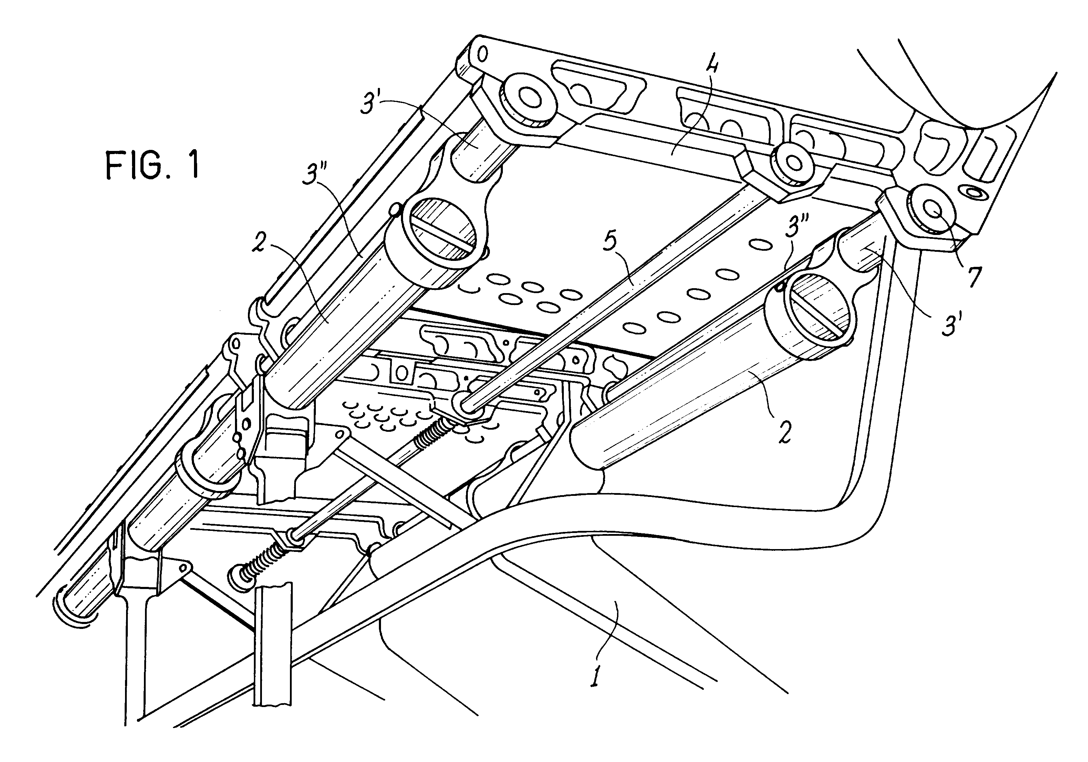

Making first reference to figure 1, it can be noted the lower part of the frame of a group of three seats for an aircraft.

Particularly, it can be noted the legs 1 of the seats, fixed to two tubular fixed elements 2.

Above said tubular elements 2, two telescopic tubes 3 are provided, parallel with respect to the elements 2 and having a movable inner portion 3' and an outer fixed portion 3".

Above, the frame 4 of each single seat, that will be described in greater detail in the following, is provided.

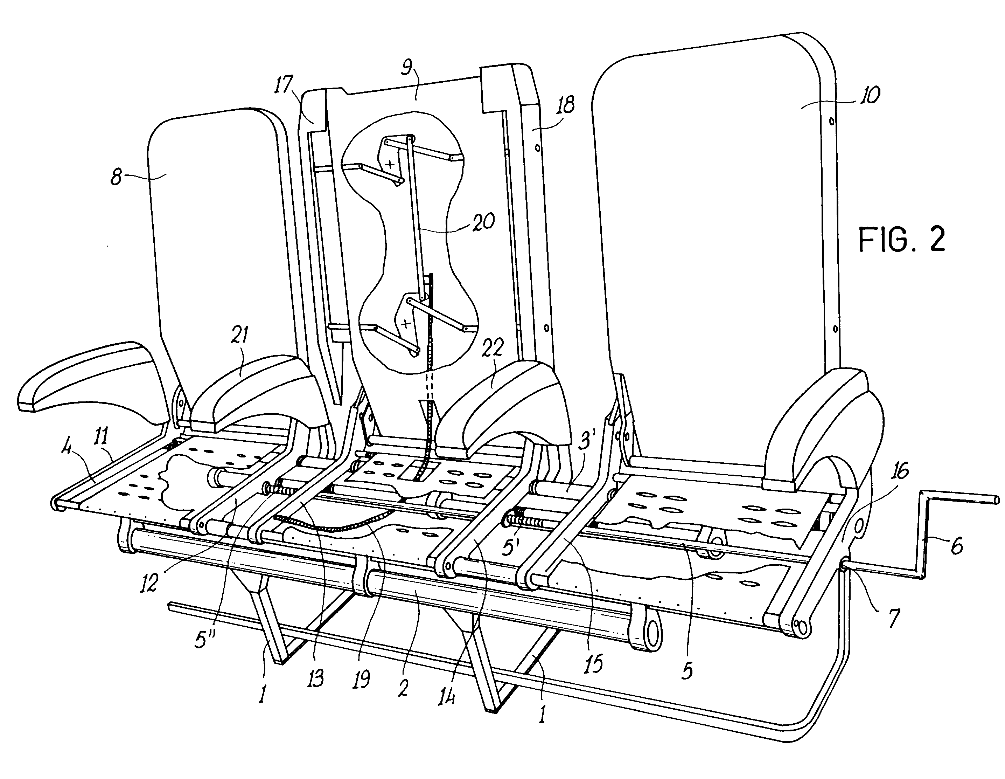

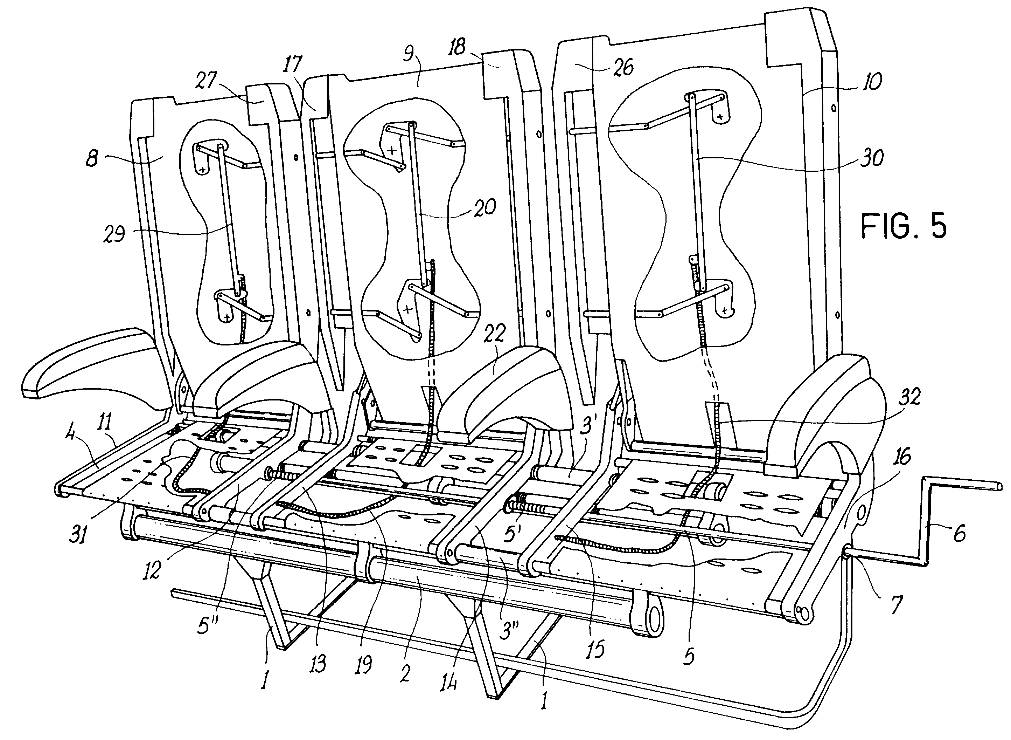

Below said frame 4, a worm screw 5 is provided, parallel with respect to said tubular elements 2 and to said telescopic tubes 3, that can be controlled by an electric screwdriver, not shown, an a crank 6 (see figures 2 and 5) from the coupling 7.

It will be now made reference also to the figures 2-4, wherein it is shown a solution of the mechanism according to the invention allowing to obtain a 3x2 transformation.

In figure 2 three seats can be seen, respectively the wall seat 8, the central seat 9 and the corridor seat 10, provided with the coupling 7 for the operation crank 6 of the worm screw 5.

The frame 4 of the seats 8, 9 and 10 provided two transverse elements, respectively 1 1 and 12, 13 and 14 and 15 and 16.

The worm screw 5 begins at the transverse element 12, and its thread changes downstream the transverse element 14.

The transverse elements 12, 13, 14 and 15 are slidably mounted on the outer portion 3" of the telescopic tubes 3, while the transverse element 16 is mounted on the slidable portion 3' of the telescopic tubes 3.

The tread of the portion 5' of the worm screw downstream the transverse element 14 is double with respect to that of the portion 5" of the worm screw 5 between the transverse element 12 and the transverse element 14.

In this way, during the rotation of the worm screw, for centimeter of motion of the transverse element 12 or 13, it is obtained a double motion of the transverse element 14 and of the element 15.

It allows to maintain proportional motions during the widening of the two lateral seats 8 and 10.

Obviously, said movement must be also transferred to the sides 17 and 18 of the central seat 9.

The transmission of the motion occurs by a wire 19, fixed on a motion element, particularly the transverse element 13, transferring the element 13 to the lever system 20 acting in such a way to approach each other the two sides 17 and 18, so that the seats 8 and 10 reaches the desired dimensions.

Obviously, it is necessary to obtain the corresponding motion also of the armrests 21 and 22.

Also this motion is obtained by the action of the worm screw 5.

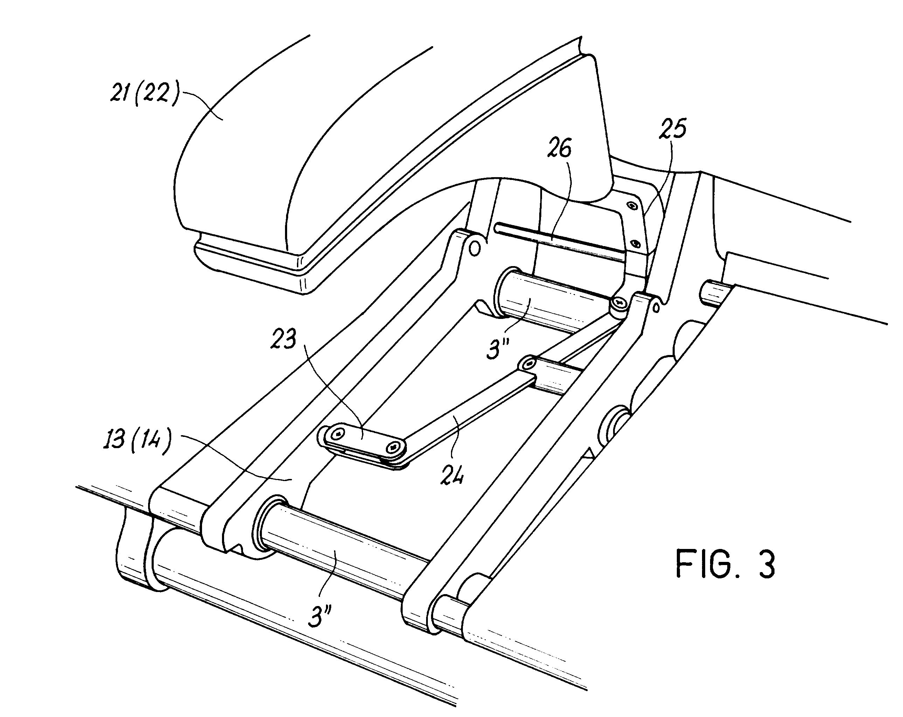

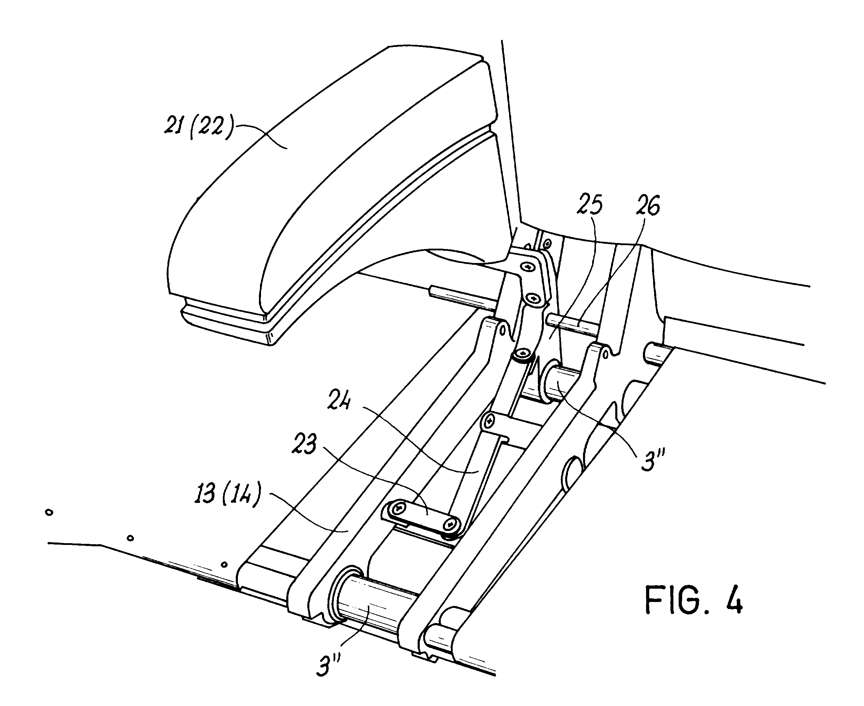

Observing particularly the figures 3 and 4, it can be noted the system for the transfer of the motion to the armrests 21 (22). It must be first noted that in case of the 3x2 transformation, the motion of the armrests must be opposite with respect to the motion of the structure (practically, the armrests 21 and 22 widen, while the structure restricts).

The lever system 23, 24 and 25 transmit the motion of the transverse element 13 (14) to the armrest 21 (22).

The lever 24 is provided in such a way to slide on the outer portion 3" of the telescopic tube 3, while the lever 25 slides on an arm 26 parallel with respect to said tube 3. Thus, as it can be clearly understood from the figures 3 and 4, the armrest 21 (22) moves in a direction opposite with respect to the motion direction of the transverse element 13 (14) until it reaches the position shown in figure 4.

It can thus understood how the mechanism according to the invention allows to contemporaneously obtain the variation of width of the seat and the seat back and the notion of the armrest, maintaining proportioned the new seats obtained.

Making now reference to the figures 5-7, it is shown a solution according to the invention allowing to obtain a 3x3 transformation.

The parts of figure 5-7 corresponding to the parts of figures 1-4 are indicated by the same references.

In this case, as already said, the transformation brings from three "economic" seats to three "business" seats, so that a global widening rather than a restriction toward the centre of the structure is obtained.

Substantially, the motion of the transverse elements 3, 14, 15 and 16 are equal to those of the preceding case, but in this solution an outward motion is obtained during the transformation and an inward motion is obtained during the restore of the original condition.

Also the lever mechanism 20 for moving the sides 17 and 18 of the seat 9 is the same, realized in such a way to work in an opposite direction with respect to the solution shown in figure 2.

However, in this case also a displacement of the inner sides 27 and 28 of the seats 8 and 9 respectively must be obtained.

Therefore, further lever systems 29 and 30 are provided, conceptually similar to the system 20, with the only difference that they act only on one side rather than on two sides, connected by the wires 31 and 32, respectively to the transverse elements 12 and 15.

Another difference is provided in the transmission of the motion to the armrest 21 and 22.

In fact, in this case, it is necessary that the armrests 21 and 22 move in the same direction of the structure, and not in an opposite direction as in the preceding case, so that it is not necessary to provide the lever system previously described, but is sufficient that the transverse element 13 (14) is connected to the armrest 21 (22) by the bracket, so as to be dragged during its motion.

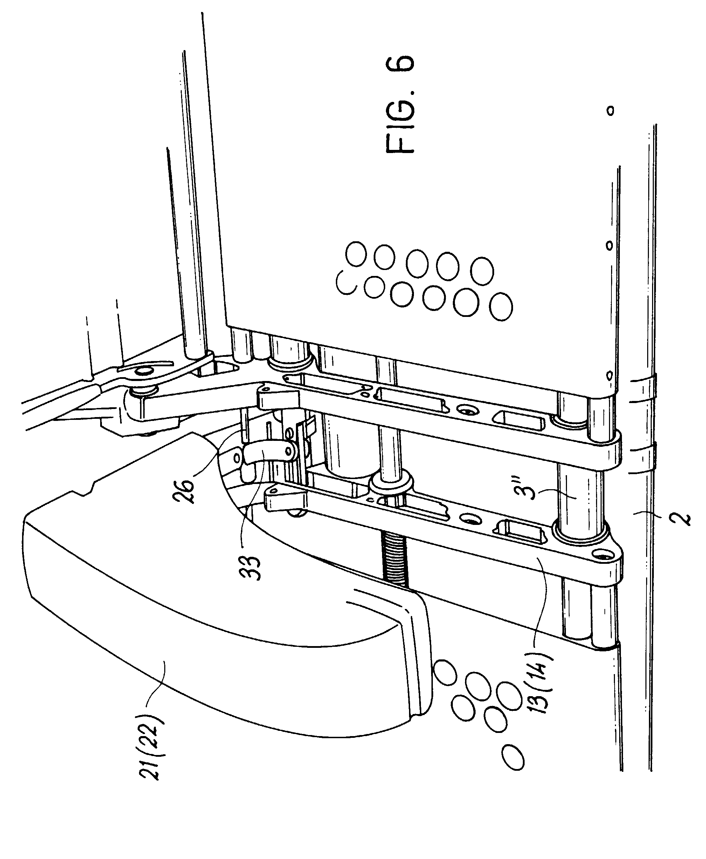

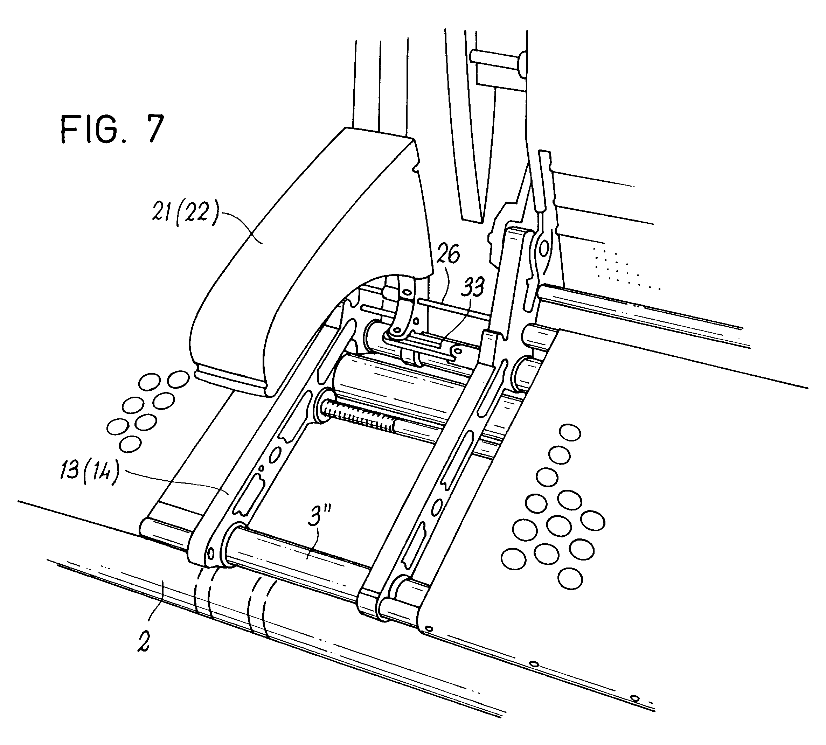

As it can be seen in figures 6 and 7, this dragging motion must however take into consideration the fact that the displacement of the armrest must be proportioned to the final width of the various seats, so that the bracket 33 will be realized in such a way to provide a first dead travel (fixed armrest) and then a dragging travel.

In this case too, the worm screw will have two different portions, respectively 5 and 5' with a different thread.

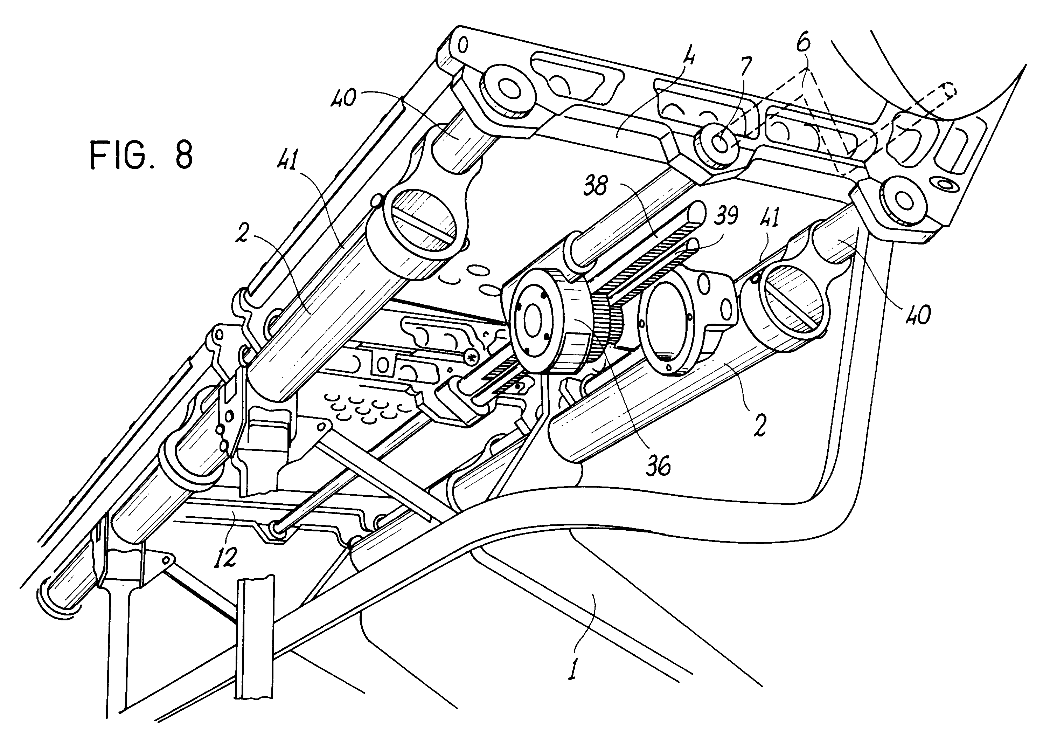

Making now reference to figures 8-14, a second embodiment of the mechanism according to the invention will be described.

In the different figures, the parts corresponding to those of the embodiment already described will be indicated by the same reference numbers.

Below said frame 4, a reduction unit 36 is provided, coupled with a longitudinal shaft 28, parallel with respect to said tubular elements 2 and to said telescopic tubes 3, upon which it is possible to act for example by an electric screwdriver, not shown, a crank 6 (see figures 2 and 5) from the coupling 7.

Said reduction unit 36 transmits the motion to two racks 38 and 37 connected to the transverse elements 12 and 14, respectively.

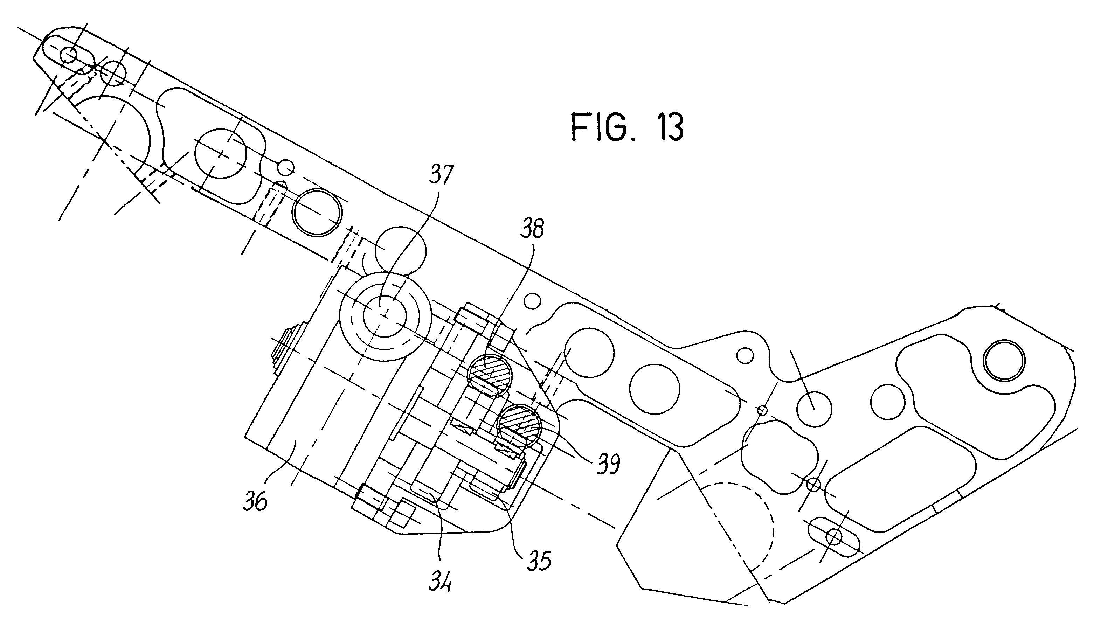

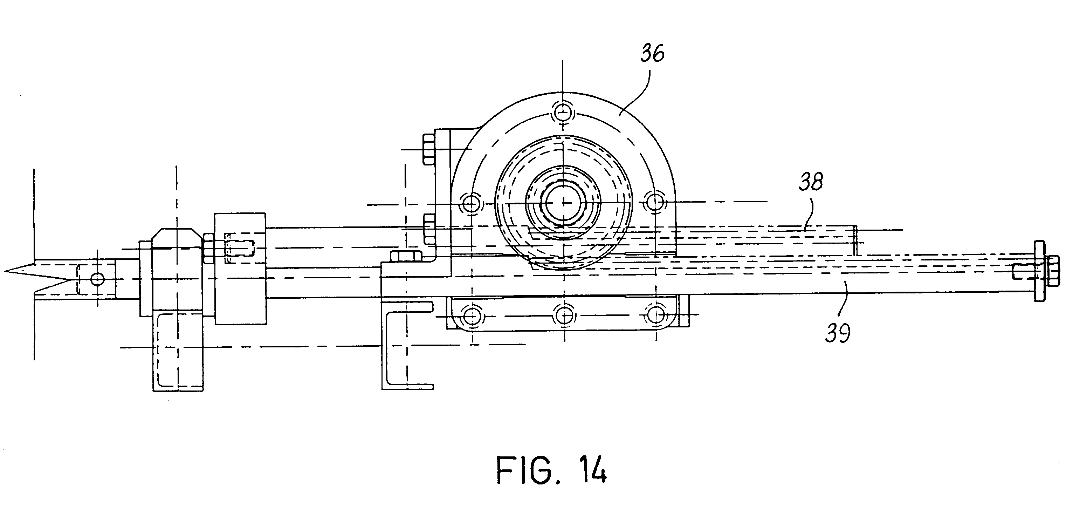

As it will be more evident from figures 13 and 14, within the reduction unit 36 an epicycloid gear, transforming the motion of the shaft 5' perpendicularly with respect to the same shaft 37, and two pinions, having different size and number of teeth, gearing with the two racks 38 and 39, respectively, are provided, so as to determine a different displacement of the various seats.

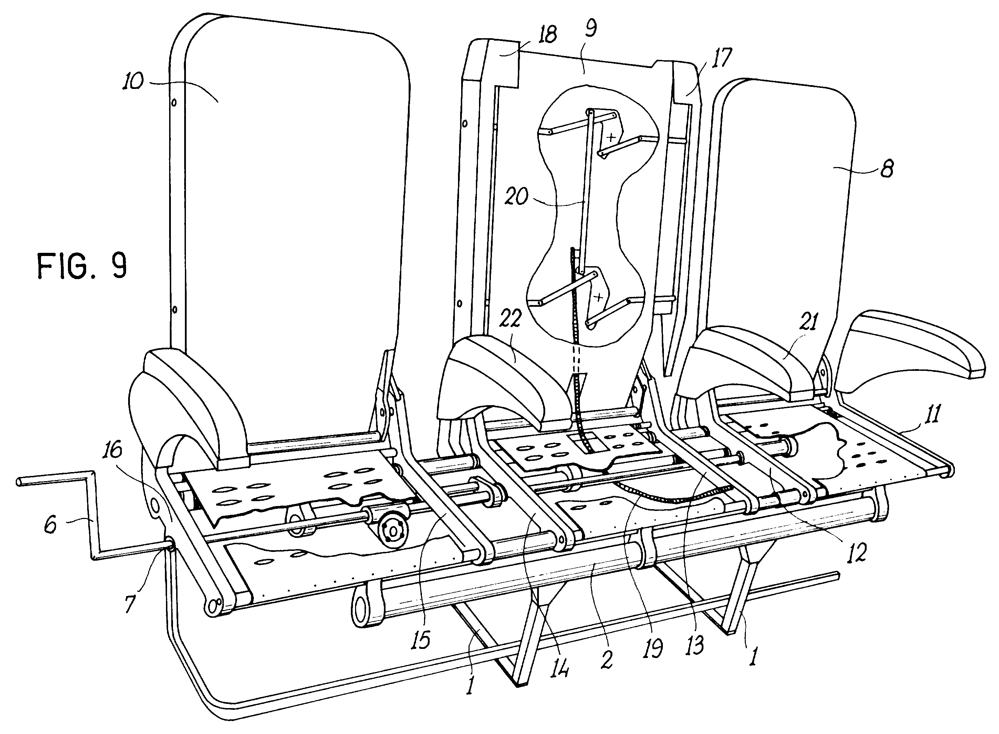

It will be now made reference also to figure 9, wherein it is shown a solution of the mechanism according to the invention allowing to obtain a 3x2 transformation.

In figure 2 three seats can be seen, respectively the wall seat 8, the central seat 9 and the corridor seat 10, provided with the coupling 7 for the operation crank 6 of the reduction unit 36.

The frame 4 of each of the seats 8, 9 and 10 provides two transverse elements, respectively 11 and 12, 13 and 14 and 15 and 16.

The reduction unit 36 begins at the transverse element 12, and its thread changes downstream the transverse element 14.

The transverse elements 12, 13, 14 and 15 are slidably mounted on the outer portion 40 of the telescopic tubes 3, while the transverse element 16 is mounted on the slidable portion 41 of the telescopic tubes 3.

The fact that the two pinions provided within the reduction unit 36 are different determines that the motion transmitted to the racks 38 and 39 is different and consequently during the rotation of the shaft 37, for each centimeter of displacement of the transverse element 12 or 13 a double displacement of the transverse element 14 and 15 is obtained.

This fact allows to maintain proportional the displacements during the widening of the lateral seats 8 and 10.

Obviously, said movement must be also transferred to the sides 17 and 18 of the central seat 9.

The transmission of the motion occurs by a wire 19, fixed on a motion element, particularly the transverse element 13, transferring the element 13 to the lever system 20 acting in such a way to approach each other the two sides 17 and 18, so that the seats 8 and 10 reaches the desired dimensions.

Obviously, it is necessary to obtain the corresponding motion also of the armrests 21 and 22.

Also this motion is obtained by the action of the reduction unit 36.

The motion of the arms occurs as already described in the preceding.

It can thus understood how the mechanism according to the invention allows to contemporaneously obtain the variation of width of the seat and the seat back and the notion of the armrest, maintaining proportioned the new seats obtained.

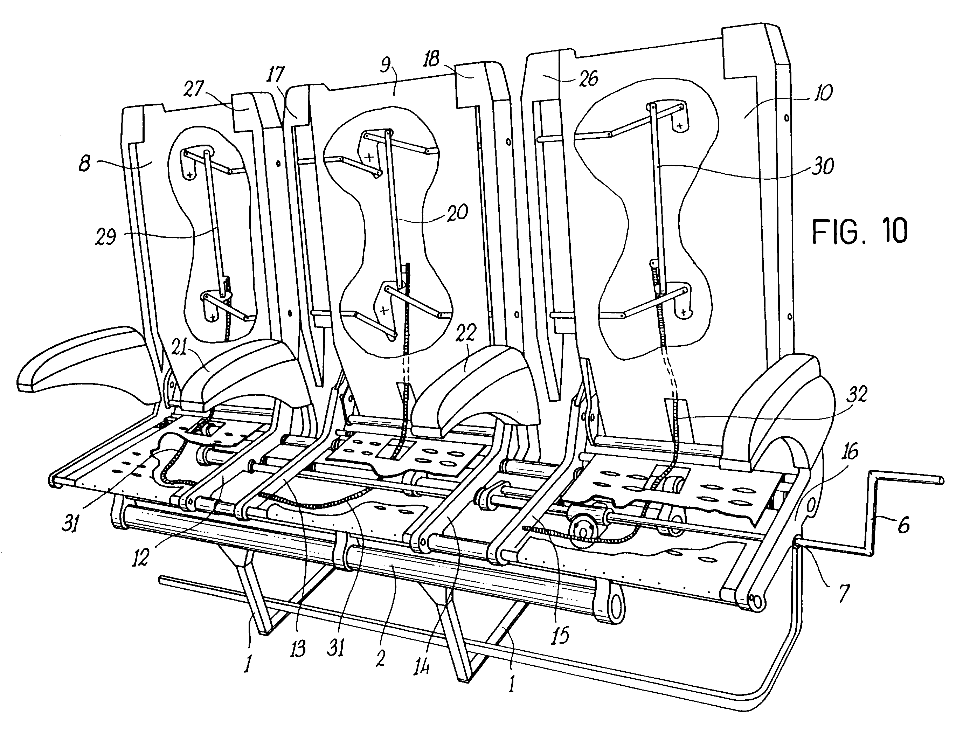

Making now reference to the figures 10-12, it is shown a solution according to the invention allowing to obtain a 3x3 transformation.

The parts of figure 10-12 corresponding to the parts of figures 8-9 are indicated by the same references.

In this case, as already said, the transformation brings from three "economic" seats to three "business" seats, so that a global widening rather than a restriction toward the centre of the structure is obtained.

Substantially, the motion of the transverse elements 13, 14, 15 and 16 are equal to those of the preceding case, but in this solution an outward motion is obtained during the transformation and an inward motion is obtained during the restore of the original condition.

Also the lever mechanism 20 for moving the sides 17 and 18 of the seat 9 is the same, realized in such a way to work in an opposite direction with respect to the solution shown in figure 9.

However, in this case also a displacement of the inner sides 27 and 28 of the seats 8 and 9 respectively must be obtained.

Therefore, further lever systems 29 and 30 are provided, conceptually similar to the system 20, with the only difference that they act only on one side rather than on two sides, connected by the wires 31 and 32, respectively to the transverse elements 12 and 15.

Another difference is provided in the transmission of the motion to the armrest 21 and 22.

In fact, in this case, it is necessary that the armrests 21 and 22 move in the same direction of the structure, and not in an opposite direction as in the preceding case, so that it is not necessary to provide the lever system previously described, but is sufficient that the transverse element 13 (14) is connected to the armrest 21 (22) by the bracket, so as to be dragged during its motion.

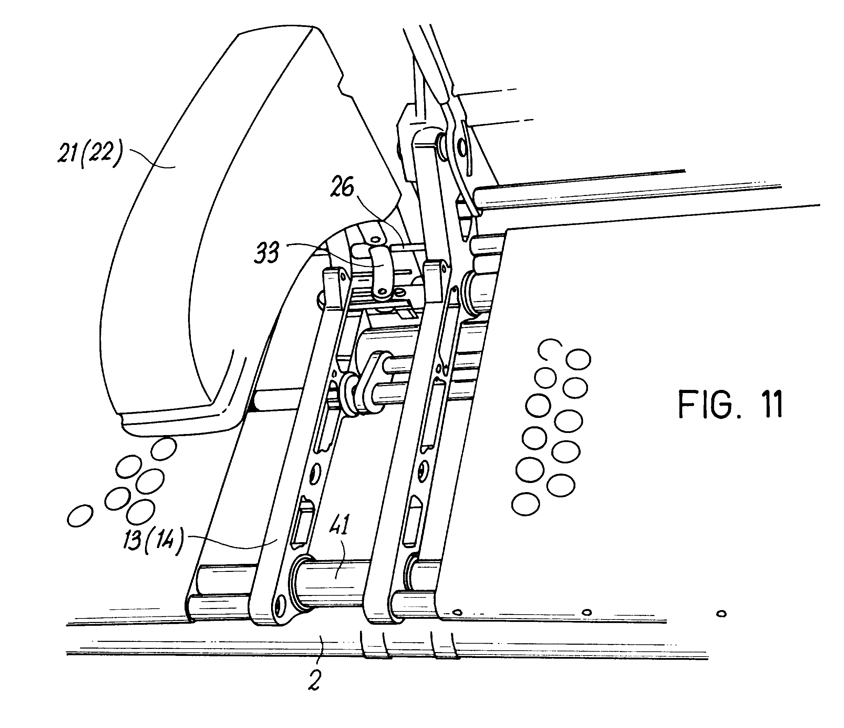

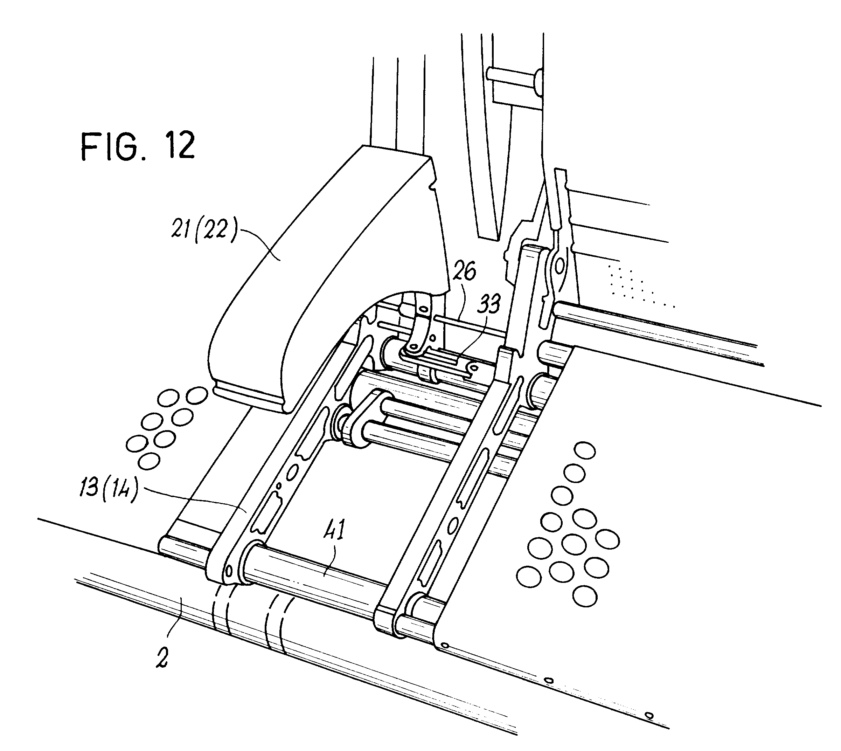

As it can be seen in figures 11 and 12, this dragging motion must however take into consideration the fact that the displacement of the armrest must be proportioned to the final width of the various seats, so that the bracket 33 will be realized in such a way to provide a first dead travel (fixed armrest) and then a dragging travel.

In this case too, reduction unit 36 will have two different pinions to obtain a different motion of the racks 38 and 39.

With reference to figures 13 and 14, it is particularly shown the reduction unit 5 allowing to obtain the working of the device as previously illustrated and described.

In said figures, it is possible to note the two pinions 33 and 34 having different sizes to drive the racks 38 and 39.

In the figures it is not possible to see the epicycloid gear coupled to the shaft 37.

It can be easily understood how the reduction unit 36 allows an easy motorisation of the mechanism simply using the shaft of the epicycloid gear.

The present invention has been described for illustrative, but not limitative purposes, according to its preferred embodiments, but it is to be understood that modification and/or changes can be introduced by those skilled in the art without departing from the relevant scope as defined in the enclosed claims.

## Claims

1. Mechanism for the transformation of passenger seats, particularly for aircraft, characterized in that three seat frames are provided, respectively a wall, a central and a lateral seat, each one of said frames comprising two substantially parallel lateral transverse elements, the outermost of which of the wall seat is fixed, said mechanism comprising at least two longitudinal fixed frame elements, coupled to the seat feet, at least two telescopic elements, parallel with respect to said longitudinal fixed frame elements, comprising an inner tube and an outer tube, and coupled to said transverse elements of the frame of said seats, means operable by actuating outer means, determining the displacement of said transverse frame elements, means transmitting the motion of at least one of said transverse elements to the sides of at least one of said seats and means transmitting the motion of one of said transverse frame elements to a corresponding armrest between the central seat and, respectively, the wall seat and the lateral seat.

2. Mechanism according to claim 1, characterized in that the inner transverse element of the wall seat, both the transverse elements of the central seat and the inner one of the lateral seat are slidably provided on said telescopic tubes, while the outer one of the lateral seat is coupled to the inner tubes of the telescopic tubes.

3. Mechanism according to claim 1 or 2, characterized in that said means operable by outer means are comprised of a worm screw provided between the inner transverse element of the wall seat and the outer transverse element of the lateral seat, operable by external means, determining the motion of said transverse elements of the frame.

4. Mechanism according to claim 1 or 2, characterized in that said means operable by outer means are comprised of a reduction unit connected on one side to a drive shaft and on the other side to a first and second rack element, said rack elements being parallel with respect to the frame, and coupled to the inner transverse element of the wall seat and to the outer transverse element of the central seat, respectively, operable by outer means, determining the motion of said frame transverse elements, said reduction unit determining a different motion of said first and second rack element.

5. Mechanism according to one of the preceding claims 1-3, characterized in that said worm screw provides two portions having a different thread.

6. Mechanism according to claim 4, characterized in that, said worm screw has the portion corresponding to the frame of the lateral seat having a thread about double with respect to the one of the central seat.

7. Mechanism according to one of the preceding claims 1-3 and 5-7, characterized in that, said worm screw is operated by an electric screwdriver, a crank and like.

8. Mechanism according to one of the preceding claims 1-2 and 4, characterized in that said reduction unit provides an epicycloid gear driven by said drive shaft and two pinions, said pinions being driven by said epicycloid gear and transmitting the motion to said first and second rack elements, said pinions having different size and number of teeth in order to obtain said different motion of said rack elements.

9. Mechanism according to claim 8, characterized in that the motion of said first rack element is about the double with respect to the motion of said second rack element.

10. Mechanism according to one of the preceding claims 1, 2, 4 and 8-9, characterized in that said reduction unit is driven by an electric screwdriver, a crank or like, or by a motor.

11. Mechanism according to one of the preceding claims, characterized in that said means for transmitting the motion of at least one transverse frame element to the sides of at least one of said seats are provided between a frame element and the sides of the central seat and determine an approaching of the above sides during the transformation from "economic" into "business", the means for transmitting the motion of one of the transverse frame elements to a corresponding armrest determining the motion of the armrest in a direction opposite to the motion direction of the transverse frame element.

12. Mechanism according to claim 11, characterized in that said means for the transmission of the motion of one of the frame elements to a corresponding armrest comprises a first lever, fixed to the frame element in a position substantially perpendicular to the same a second diagonal lever, coupled to the end of said first lever, a third lever, coupled to the end of said second diagonal lever and to said armrest and sliding along the outer tube of a telescopic tube and along an arm parallel with respect to said telescopic tube.

13. Mechanism according to one of the claims 1-11, characterized in that said means for transmitting the motion of at least one transverse frame element to the sides of at least one of said seats are provided between a frame element and the sides of the central seat and between two further frame elements and the inner sides of the wall seat and lateral seat, respectively, and determine an motion away of the above sides during the transformation from "economic" into "business", the means for transmitting the motion of one of the transverse frame elements to a corresponding armrest determining the motion of the armrest in the same direction of the motion of the transverse frame element.

14. Mechanism according to claim 13, characterized in that said means for the transmission of the motion of the frame elements to a corresponding armrest comprises a bracket, provided between the outer tube of one of the telescopic tubes and the armrest so as to drag it during its motion, with a first idle step of the motion, said armrest sliding along an arm parallel with respect to said telescopic tube.

15. Mechanism according to one of the preceding claims, characterized in that means transmitting the motion of at least one of said transverse elements to the sides of at least one seat comprises a wire, connected on one side to one of said transverse elements and on the other side to a lever system, provided within the seat back, acting on the same sides.

16. Mechanism according to claim 15, characterized in that said lever system provides a first vertical lever, connected at its ends to two shaped levers upon which one or two further lever, depending on the fact whether it is acting on one or both the sides of the seat, are pivoted.
